(19) Europäisches Patentamt
European Patent Office
Office européen des brevets

(11) EP 0 828 553 B1

(12) **EUROPÄISCHE PATENTSCHRIFT**

(45) Veröffentlichungstag und Bekanntmachung des Hinweises auf die Patenterteilung:
**04.07.2001 Patentblatt 2001/27**

(21) Anmeldenummer: **96915007.7**

(22) Anmeldetag: **02.05.1996**

(51) Int Cl.⁷: **B01D 69/02**, B01D 67/00

(86) Internationale Anmeldenummer:
**PCT/EP96/01814**

(87) Internationale Veröffentlichungsnummer:
**WO 96/37282 (28.11.1996 Gazette 1996/52)**

(54) **SYNTHETISCHE TRENNMEMBRAN**

SYNTHETIC SEPARATION DIAPHRAGM

MEMBRANE DE SEPARATION SYNTHETIQUE

(84) Benannte Vertragsstaaten:
**DE ES FR GB IT NL SE**

(30) Priorität: **24.05.1995 DE 19518624**

(43) Veröffentlichungstag der Anmeldung:
**18.03.1998 Patentblatt 1998/12**

(73) Patentinhaber: **Membrana GmbH**
**42289 Wuppertal-Barmen (DE)**

(72) Erfinder:
- **RÖTTGER, Henning**
  **D-63939 Wörth (DE)**
- **WECHS, Friedbert**
  **D-63939 Wörth (DE)**

(74) Vertreter: **Fett, Günter et al**
**Acordis AG,**
**Postfach 10 01 49**
**42097 Wuppertal (DE)**

(56) Entgegenhaltungen:
**EP-A- 0 247 597**
**EP-A- 0 305 787**
**EP-A- 0 357 021**
**WO-A-93/04223**
**FR-A- 2 541 586**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft integrale, asymmetrische, synthetische Trennmembranen für den Nanofiltrationsbereich und den unteren Ultrafiltrationsbereich auf der Basis von Polymeren, welche in ∈-Caprolactam löslich sind, ein Verfahren zur Herstellung derselben sowie die Verwendung dieser Membranen.

Membranen aus synthetischen Polymeren sind bereits seit längerem bekannt. Auch der Einsatz von ∈-Caprolactam als Lösungsmittel bei der Herstellung von Membranen aus synthetischen Polymeren ist an sich bereits bekannt.

So wird in dem DE-A 3 327 638 ein Verfahren zur Herstellung von Poren aufweisenden Formkörpern beschrieben, bei dem aus Polyamid 6, E-Caprolactam und Polyäthylenglykol ein entsprechender Hohlfaden hergestellt wird. Die Verformung erfolgt bei einer Düsentemperatur von 210°C. Die Spinnlösung ist homogen und dünnviskos und muß deshalb in ein U-förmiges Abkühlrohr extrudiert werden, in dem die mechanische Belastung der Polymermischung bis zum Zeitpunkt der beginnenden Erstarrung gering gehalten wird.

Das Ausfällen des Polymers geschieht gemäß dem dort beschriebenen Verfahren nach einem thermisch induzierten Vorgang. Eine durch Verwendung eines Fällungsmittel diffusiv induzierte Koagulation findet praktisch nicht statt. Die dort beschriebenen Membranen sind für die Mikrofiltration geeignet, sie weisen in der Regel eine isotrope Struktur auf.

Es wird zwar auch auf die Möglichkeit hingewiesen, ein anisotropes Porensystem zu erhalten, aber außer der Bemerkung, daß ein Gradient in der Richtung der Oberfläche in das Innere des Formkörpers vorhanden ist, fehlen nähere Angaben über die Asymmetrie der Membranen.

In der EP-B1-0 361 085 werden integrale asymmetrische Polyäthersulfonmembranen, Verfahren zu deren Herstellung sowie die Verwendung zur Ultrafiltration und Mikrofiltration beschrieben. Die dort erwähnten Polyäthersulfonmembranen haben maximale Porendurchmesser im Bereich von 0,02 bis 2 µm, so daß diese Membranen im wesentlichen für die Mikrofiltration und den oberen großporigen Bereich der Ultrafiltration geeignet sind. Membranen, welche für die Nanofiltration, die Hämodialyse, Hämodiafiltration und Hämofiltration und den unteren kleinporigen Bereich der Ultrafiltration geeignet sind, werden in dieser Patentschrift nicht beschrieben.

In der EP-B1-0 357 021 wird ein Verfahren zur Herstellung von Membranen aus bestimmten Polymeren beschrieben, bei dem als wesentlicher lösender Bestandteil ε-Caprolactam eingesetzt wird und in dem man die Formung der Membranen und sonstiger Körper nach dem Prinzip der Phasenseparation durchführt. Auch die in dieser Patentschrift beschriebenen Membranen werden im Mikrofiltrations- und Ultrafiltrationsbereich eingesetzt, sie sind ferner zur geregelten Wirkstoffabgabe geeignet.

Es ist bekannt, daß Membranen, welche für bestimmte Trennvorgänge eingesetzt werden sollen, auch bestimmte Voraussetzungen erfüllen müssen. Ihre Aufgabe ist es, Austauschvorgänge zu ermöglichen, wobei es sich je nach der gestellten Aufgabe z.B. darum handeln kann, feste Teilchen aus einer Flüssigkeit zu entfernen oder aber auch das Abtrennen von gelösten Teilchen zu bewirken.

Es hat sich als zweckmäßig erwiesen, die Trennvorgänge in bestimmte Kategorien aufzuteilen, wobei man den Bereich der umgekehrten Osmose als Hyperfiltration bezeichnet. Diesem Bereich schließt sich mit zunehmender Porengröße die Nanofiltration an, gefolgt von der Ultrafiltration, der Mikrofiltration und der Teilchenfiltration.

Diese Einteilung in fünf verschiedene Filtrationsbereiche hat sich in der Praxis bewährt, dabei ist jedoch zu beachten, daß sich die einzelnen Bereiche jeweils an ihren oberen bzw. unteren Enden überlappen können.

Im Teilchenfiltrationsbereich ist es verhältnismäßig einfach, Porengröße und Durchlässigkeit bzw. Rückhaltevermögen für Teilchen bestimmter Größe in Beziehung zu setzen, da in diesen Bereichen sowohl die Teilchengröße als auch die Porengröße verhältnismäßig einfach, z.B. zumindest im oberen Bereich der Teilchenfiltration schon mit dem bloßen Auge, im mittleren und unteren Bereich auf jeden Fall mit optischen Mikroskopen festgestellt werden kann. Auch sind in diesen Filtrationsbereichen die abzutrennenden Teilchen feste Teilchen, die während der Filtration im wesentlichen ihre geometrischen Ausmaße beibehalten. Dies gilt im wesentlichen auch für den Bereich der Mikrofiltration, mit der sehr feinteilige Teilchen wie Farbpigmente, Bakterien, Rußteile im Tabakdampf u.ä. abfiltriert werden können. Auch hier kann Porengröße und Teilchengröße noch in etwa in Beziehung gesetzt werden.

Für die engerporigen Ultrafiltrationsmembranen wird die Trenngrenze (cutt-off) der Membran bestimmt. Dabei werden genau definierte Lösungen von Molekülen bekannter Molmasse, Größe und Form unter definierten Filtrationsbedingungen verwendet. Üblich sind Messungen mit wäßrigen polydispersen Dextranlösungen, die eine Bestimmung der Trenngrenze der Membran für einen breiten Molmassenbereich ermöglichen. Diese Methode wird z.B. in Biotechnology Vol.9, Seiten 941 - 946, Jahrgang 1991 beschrieben (G.Tkacik und S. Michaels).

Besonders für medizinische Dialysemembranen (künstliche Niere), ist die Bestimmung des Siebkoeffizienten von Cytochrom C, Albumin und anderen Proteinen definierter Molmasse üblich. Der Siebkoeffizient wird definiert als

$$S_k = \frac{C_{Permeat}}{C_{Stammlösung}}$$

wobei $C_{permeat}$ die Konzentration des zu bestimmenden Stoffes im Filtrat (Permeat) und $C_{Stammlösung}$ die Konzentration des Stoffes in der Ausgangslösung ist.

Als oberer Bereich der Ultrafiltration im Sinne der Erfindung wird der Bereich angesehen, bei dem die die Trenngrenze bestimmenden Poren der Membranen einen Durchmesser von 0,02 µm und darüber aufweisen. Als unterer Bereich wird der Ultrafiltrationsbereich angesehen, bei dem die die Trenngrenze bestimmenden Poren der Membranen einen Durchmesser unterhalb von 0,02 µm aufweisen.

Obwohl bereits zahlreiche Membranen für die verschiedensten Trennaufgaben beschrieben worden sind und auch Verfahren bekannt sind, bei welchen für die Herstellung der Membranen ε-Caprolactam als Lösungsmittel eingesetzt wird, besteht noch ein Bedürfnis nach verbesserten Membranen, insbesondere nach solchen, bei denen nicht nur die Trenngrenze sondern auch die hydraulische Permeabilität weitgehend unabhängig voneinander in möglichst weiten Bereichen verändert werden kann und die für den Einsatz bei der Nanofiltration und im unteren Bereich der Ultrafiltration geeignet sind.

Aufgabe der Erfindung ist es somit, Membranen zur Verfügung zu stellen, deren Trenngrenze und hydraulische Permeabilität genau einstellbar ist, bei der man aber andererseits unabhängig von der Trenngrenze auch die hydraulische Permeabilität definiert einstellen kann, so daß es möglich ist, Membranen mit einer bestimmten Trenngrenze zu erzeugen, die je nach Bedarf eine niedrigere, mittlere oder auch hohe hydraulische Permeabilität aufweisen.

Andererseits soll es aber auch möglich sein, Membranen mit einer gegebenen hydraulischen Permeabilität herzustellen, bei denen man aber je nach Bedarf auch die Trenngrenze innerhalb bestimmter Bereiche präzise einstellen kann.

Andererseits soll es möglich sein, abhängig von den speziellen Einsatzzwecken unter Verwendung bestimmter Polymeren Membranen herzustellen, die außerdem spezifische Eigenschaften aufweisen wie Dampfsterilisierbarkeit, Biokompatibilität bzw. Blutverträglichkeit, z.B. eine ausgewogene Balance an hydrophilen und hydrophoben Gruppen auf der Oberfläche der Membran aufweisen oder eine entsprechend ausgeprägte Ladung besitzen, chemische Stabilität, Oxidationsbeständigkeit, UV-Beständigkeit, Wiederverwertbarkeit auch nach Trocknung, Lagerfähigkeit auch im trockenen Zustand ohne Verschlechterung der Leistungseigenschaften, günstiges Adsorptionsverhalten und gute mechanische Eigenschaften.

Diese Aufgabe wird gelöst durch eine integrale, mehrfach asymmetrische semipermeable Membran aus in ∈-Caprolactam löslichen Polymeren in Form von Flachmembranen, Schlauchmembranen oder Hohlfasermembranen bestehend aus

a) einer an der Oberfläche offenporigen Trennschicht A mit einer definierten Trenngrenze im Bereich von 500 bis 5 Millionen Dalton, wobei die Trennschicht A maximal 20 % der Gesamtdicke der Membranwand ausmacht und durchgängige Poren aufweist,

b) einer sich daran anschließenden grobporigen, schwammartigen, zellartige Poren aufweisenden Stützschicht B ohne Fingerporen, die einen Porengradienten ausgehend von der Grenze mit der Trennschicht aufweist, deren hydraulischer Widerstand gegenüber der Trennschicht A und der Schicht C vernachlässigbar klein ist,

c) einer sich anschließenden Schicht C, deren Porengröße größer als die der Trennschicht A, jedoch kleiner als die der Stützschicht B ist, und die in Kombination mit der Trennschicht A die hydraulische Permeabilität der Membran bestimmt, ohne dabei die Trenngrenze zu beeinflussen, und die zur anderen Oberflächenseite offenporig ist, wobei diese offenen Poren größer sind als die offenen Poren an der Oberfläche der Trennschicht A.

Vorzugsweise macht die Trennschicht maximal 5 bis 10, insbesondere maximal 1 bis 5 % der Gesamtdicke der Membranwand aus.

In einer besonders vorteilhaften Ausführungsform der Erfindung liegt die definierte Trenngrenze im Bereich von 500 bis 400 000, insbesondere im Bereich von 500 bis 60 000 Dalton.

Es ist vorteilhaft, wenn mindestens 50 % der Poren in der Stützschicht B einen Durchmesser von 0,1 bis 10 µm aufweisen, mindestens 50 % der Poren der Schicht C einen Porendurchmesser von 0,05 bis 2 µm aufweisen, wobei die Porengröße der Schicht C kleiner als die der Porenschicht B ist.

Es ist vorteilhaft, wenn die Stützschicht B 10 bis 60 % und die Schicht C 30 - 80 % der Gesamtdicke der Membran ausmacht.

In einer besonders vorteilhaften Ausführungsform der Erfindung besteht die Membran aus mindestens 80 Gew.% Polyäthersulfon.

Gegenstand der Erfindung ist ferner ein Verfahren zur Herstellung von Membranen der vorstehend beschriebenen Art, indem man aus einem in ∈-Caprolactam löslichen Polymeren in einer Mischung von ∈-Caprolactam und einem oder mehreren Cosolventen, sowie gegebenenfalls von Nichtlösern und weiteren Additiven eine hochviskose, 17 bis 27 Gew.%ige Lösung des Polymeren herstellt, die gemessen bei 40°C eine Viskosität von mindestens 20 Pa. s aufweist, diese Lösung unter Verwendung üblicher Werkzeuge zu einer Flach-, Schlauch- oder Hohlfasermembran ausformt, wobei man zunächst bei der Ausformung der Polymerlösung durch unterschiedliche Temperaturen an den beiden Oberflächen der ausgeformten Polymerlösung ein Viskositätsprofil über die Dicke der sich bildenden Membran einstellt, das Polymer, ggf. unter Zwischenschaltung einer klimatisierten Luftstrecke, die einen gas- oder dampfförmigen Nichtlöser des Polymers enthält, durch diffusiv induzierte Koagulation ausfällt, indem man auf der Seite mit der niedrigeren Temperatur (und somit höherer Viskosität) die Trennschicht A durch eine schnellere Koagulation bildet als auf der Seite, auf der sich die Schicht C bildet.

Vorzugsweise wird zum Ausformen eine Lösung verwendet, die eine Temperatur von 20 bis 90°C aufweist.

Vorzugsweise wird zum Ausformen eine Polymerlösung verwendet, eine eine Temperatur von 40° bis 90°C und eine Viskosität von 5 bis 150 Pa.s bei der Ausformungstemperatur aufweist.

Vorteilhaft ist eine Lösung des Polymeren mit einer Viskosität von 40 bis 200 Pa.s, gemessen bei 40°C, insbesondere mit einer Viskosität von 50 bis 150 Pa.s.

In einer weiteren vorteilhaften Ausführungsform des erfindungsgemäßen Verfahrens wird eine Hohlfasermembran hergestellt, indem man die Lösung zu einer Hohlfasermembran ausformt und zum Auslösen der Koagulation im Inneren der Hohlfasermembran eine Innenfüllung mit einer Viskosität von 0,03 bis 0,5 Pa.s, gemessen bei 25°C verwendet und die Hohlfaser durch einen mit Wasserdampf klimatisierten Luftspalt führt und die Hohlfaser sodann zur Vervollständigung der Koagulation und Fixierung der Struktur durch ein Fällbad, vorzugsweise ein temperiertes Wasserbad leitet.

Weitere Gegenstände der Erfindung sind die Verwendung der Membran für Trennprozesse im Nanofiltrationsbereich und im unteren Ultrafiltrationsbereich, insbesondere für die Hämodialyse, Hämodiafiltration und die Hämofiltration. Eine weitere Verwendung der Membranen ist die Einkapselung von Wirkstoffen. Die eingekapselten Wirkstoffe können nach dem Prinzip der Langzeitabgabe an das umgebende Milieu abgegeben werden; es ist auch möglich, daß die eingekapselten Wirkstoffe mit dem sie umgebenden Milieu in Wechselwirkung treten, ohne daß die Wirkstoffe die Kapseln verlassen. Die eingekapselten Wirkstoffe können im medizinischen Bereich sowohl extrakorporal als auch intrakorporal zum Einsatz gelangen.

Zur Herstellung der erfindungsgemäßen Membranen werden Polymere eingesetzt, die in ε-Caprolactam bzw. in Gemischen von ε-Caprolactam und einem oder mehreren Cosolventen löslich sind und film- bzw. membranbildende Eigenschaften aufweisen. Zu diesen Polymeren gehören u.a. Polyvinylidenfluorid, Polyäthersulfone, Polysulfone, Äthylenvinylalkoholpolymere, Polyätherimide, Cellulosetriacetat, Polyurethane, Polymethylmethacrylat, Polyamid-6, Polycarbonate, Polyacrylnitril, Polyetherester, Polyetherketone u.dgl.

Diese Polymere können allein, in Mischung oder als Copolymere eingesetzt werden. Bevorzugt werden biocompatible Polymere, insbesondere blutverträgliche Polymere verwendet. Dabei können die Polymere als solche biokompatibel bzw. blutverträglich sein, sie können aber auch durch Zumischen von Additiven oder Modifizierung biokompatibel gemacht worden sein. Die Modifizierung kann chemisch geschehen oder physikalisch, z.B. durch Plasmabehandlung.

Als Cosolventen können Lösungsmittel eingesetzt werden, die als solche die verwendeten Polymere lösen können, es kann sich aber auch um solche Lösungsmittel handeln, die nur in Zusammenwirkung mit ε-Caprolactam das Polymer lösen. Dazu gehören auch Lösungsmittel, welche das Membran bildende Polymer selbst nur schlecht oder nur bei erhöhter Temperatur lösen. Diese Lösungsmittel werden latente Lösungsmittel genannt, Beispiele dafür sind Butyrolacton, Propylencarbonat, Polyalkylenglykole. Zu den Lösungsmitteln, die einige der obenerwähnten Polymere auch allein lösen können, gehören u.a. Dimethylsulfoxid, Dimethylformamid, N-Methylpyrrolidon, Dimethylacetamid usw. Bevorzugt werden als Cosolventien jedoch latente Lösungsmittel verwendet.

Als Nichtlöser im Rahmen der Erfindung sind zu verstehen Verbindungen, die das Polymer selbst nicht lösen können und/oder das Lösungspotential des Gemisches ε-Caprolactam/Cosolvens absenken, d.h. die Löslichkeit des Polymeren in dem Gemisch verkleinern. Je nach Art des Polymers können u.a. als Nichtlöser fungieren: Wasser, Glycerin, Polyethylenglykole, Alkohole wie Äthanol, Isopropylalkohol u.a.m.

Als Additive kommen Verbindungen wie Polyvinylpyrrolidon, Polyäthylenglykol, Polyacrylate, Polyvinylalkohol usw. infrage. Auch können Füllstoffe wie Kieselsäure oder auch Pigmente zugefügt werden.

Diese Additive können u.a. verdickende Wirkung zeigen, sie können auch als Porenbildner oder Nucleierungsmittel fungieren oder die Benetzbarkeit der Membran, insbesondere mit Wasser verbessern. Die Additive können ggf. in der Membran noch chemisch oder physikalisch modifiziert werden. So kann man z.B. Polyvinylpyrrolidon nachträglich wasserunlöslich machen.

Es können aber auch Additive eingesetzt werden, welche die Stabilität der Membran, die Farbe, das Absorbtions- oder Adsorptionsvermögen beeinflussen. Es sind auch Zusätze möglich, die die Ladung der Membranen regeln,

z.B. der Membran anionischen oder kationischen Charakter verleihen. Hierzu gehören beispielsweise Verbindungen wie sulfonierte Polyäthersulfone, wie sie z.B. in der europäischen Patentanmeldung EP-A2-0 341 473 beschrieben werden.

Der Zusatz eines oder mehrerer Cosolventen ist deshalb angezeigt, weil ∈-Caprolactam selbst eine Substanz ist, die erst bei etwa 70°C schmilzt, so daß Lösungen von Polymeren bei dieser oder höheren Temperaturen hergestellt werden müßten. Durch Zusatz der Cosolventen kann die Lösetemperatur bzw. die Temperatur der Polymerlösungen erheblich niedriger, beispielsweise bei 40°C oder gar bei Zimmertemperatur liegen.

Von Bedeutung für das erfindungsgemäße Verfahren ist, daß die Lösung, welche zu Membranen unter Verwendung von Formwerkzeugen verarbeitet wird, eine Viskosität von mindestens 20 Pa.s, gemessen bei 40°C aufweist. Diese Viskosität kann zum einen durch die Konzentration und das Molgewicht der eingesetzten Polymeren eingestellt werden, zum anderen dient auch der Zusatz der Additive dazu, die Viskosität einzustellen. Die Viskosität hängt ferner ab von dem Anteil des ∈-Caprolactams in der zur Herstellung der Polymerlösung verwendeten Mischung von ∈-Caprolactam und Cosolvens, ferner von der Art und der Konzentration der Cosolventen und Nichtlöser. Im Rahmen der Erfindung ist unter Viskosität von mindestens 20 Pa.s gemessen bei 40°C die Viskosität der Gesamtlösung zu verstehen. Dies gilt auch für entsprechende bevorzugte Werte.

Die Herstellung der Polymerlösung kann durch zunächst einfaches Vermengen aller Komponenten geschehen, wobei auf gute Durchmischung zu achten ist. Vorzugsweise geschieht das Lösen dann unter Erwärmen, wobei Temperaturen von etwa 30 bis 120°C vorteilhaft sind. Die geeignete Temperatur hängt insbesondere vom verwendeten Polymer und den Konzentrationsverhältnissen ab und ist durch einfache Versuche leicht zu ermitteln.

Als Werkzeuge zur Verformung der Lösung können übliche Formwerkzeuge wie Schlitzdüsen, Gießkästen mit Rakel zum Auftragen auf eine Walze oder ein Trägerband, ringförmige Hohlfaserdüsen mit Vorrichtung zum Einbringen einer Innenflüssigkeit zum Ausbilden des Lumens u.dgl. dienen.

Das Viskositätsprofil, welches durch die unterschiedlichen Temperaturen an den beiden Oberflächen der ausgeformten Polymerlösung eingestellt wird, hängt einmal ab von der Temperatur der auszuformenden Lösung. Man kann somit den Verlauf des Viskositätsprofils durch die Höhe der Temperatur der Lösung (Ausformungs- oder Spinntemperatur) und durch die Temperaturdifferenzen zwischen dieser Temperatur und den Temperaturen an den beiden Oberflächen der ausgeformten Polymerlösung einstellen.

Bei Flachmembranen kann also einmal die Temperatur der Lösung eingestellt werden, sodann z.B. bei Arbeiten mit einer Trägerwalze durch die Temperatur der Unterlage, die Temperatur der einen Oberfläche und die Temperatur der anderen Oberfläche durch die Temperatur z.B. der Gießlippe des Gießkastens eingestellt werden. Auch die Temperatur der klimatisierten Luftstrecke, welche bei der Herstellung von Flachmembranen bei solchen Methoden bevorzugt verwendet wird, kann im weiteren die Ausbildung des Viskositätsprofils mit beeinflussen.

Die Koagulation auf der Seite, auf der sich die Schicht C ausbildet, ist somit verzögert und findet in der Zeitspanne statt, die sich, gerechnet vom Zeitpunkt des Verlassens des Formwerkzeuges bis zur Vollendung der Koagulation im Fällbad ergibt. Die Koagulation der Schicht A hingegen beginnt erst, wenn der vorgeformte Körper von der Walze her in das Fällbad gelangt.

Bei der Herstellung von Hohlfasermembranen ist ebenfalls die Spinnlösungstemperatur von Bedeutung, die Temperaturen an den Oberflächen der ausgeformten Polymerlösungen werden gesteuert durch die Temperatur der Düse, d.h. insbesondere des Teils der Düse, welcher die äußere Oberfläche der Hohlfasermembran formt, und die Temperatur der Innenfüllung.

Die Innenfüllung bewirkt die Ausbildung der Trennschicht A; sie löst also eine schnellere Koagulation aus. Das ist zurückzuführen insbesondere auf den Anteil und die Art an Nichtlöser und die Viskosität der Innenfüllung. Dabei ist der Anteil an Nichtlöser so hoch, daß an der Innenoberfläche eine schnellere Koagulation bewirkt wird wie in der Luftstrecke. An der Außenseite der sich bildenden Membran erfolgt in der Luftstrecke an der Außenoberfläche zunächst eine dosierte Aufnahme von Nichtlöser aus der klimatisierten Atmosphäre, wodurch eine verzögernde Vorkoagulation stattfindet. Die diffusiv induzierte Koagulation wird dann in einem Fällbad, das vorzugsweeise temperiert ist und vorzugsweise ein wäßriges Bad ist, vervollständigt.

Anstelle der Verwendung eines die Koagulation verlangsamenden klimatisierten Luftspalts kann auch in ein Fällbad extrudiert werden, das eine geringere Fällwirkung ausübt als die Innenfüllung. Dabei kann es von Vorteil sein, zwischen Fällbadoberfläche und Düsenaustrittsfläche einen kleinen Luftspalt vorzusehen. Möglich ist aber auch ein Extrudieren direkt in das Fällbad.

Soll die Trennschicht außen liegen, müssen die Verfahrensparameter entsprechend umgekehrt werden.

Unter Polyäthersulfone im Sinne der Erfindung sind Polymere zu verstehen, welche die folgende, sich wiederholende Struktureinheit aufweisen.

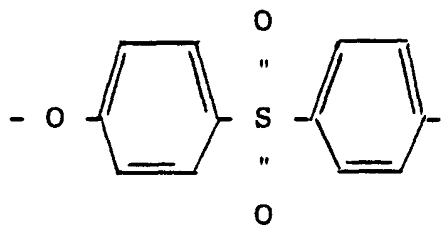

Solche Polymere sind handelsübliche Produkte.

Bei den Poren, welche sich in den einzelnen Schichten befinden, handelt es sich durchweg um durchgängige Poren, d.h. Poren, die mehr oder weniger zahlreich Verbindungen untereinander aufweisen, d.h. Öffnungen von einer Pore zur anderen Pore.

Diese Durchgängigkeit ist vor allem auch in großem Maße in der schwammartigen förmige Poren aufweisenden Schicht B gegeben. Diese schwammartige Struktur entspricht einer Struktur, wie sie u.a. in Figur 4 der EP-B1-0 361 085 dargestellt wird.

Es war besonders überraschend, daß es gemäß der Erfindung möglich war, aus verschiedenartigen Polymeren Membranen mit maßgeschneiderten Eigenschaften für verschiedene Anwendungen herzustellen. Mit der Erfindung ist es möglich, einen sehr großen Trenngrenzenbereich zu erfassen und innerhalb dieses Bereichs genau definierte Trenngrenzen einzustellen, ohne die Zusammensetzung der Spinnlösung ändern zu müssen.

Andererseits kann man innerhalb eines weiten Bereichs die hydraulische Permeabilität durch Variation der Schicht C einstellen, ohne dabei die Trenngrenze verändern zu müssen.

Bei geeigneter Auswahl des Polymeren, insbesondere bei Einsatz von Polyäthersulfonen sind die Membranen auch sehr gut dampfsterilisierbar. Die Membranen weisen ferner hohe Biokompatibilität, chemische Stabilität, Oxidationsbeständigkeit und UV-Beständigkeit auf.

Dialysemembranen gemäß der Erfindung zeichnen sich beim Einsatz für die Hämodialyse durch eine sehr hohe $\beta_2$-Mikroglobulin-Entfernungsrate aus.

Besonders vorteilhaft ist aber auch die Wiederverwendbarkeit der erfindungsgemäßen Membranen, d.h. sie können nach Gebrauch gereinigt und getrocknet werden und erneut ohne Leistungseinbußen zum Einsatz gelangen. Sie verfügen über gute mechanische Eigenschaften wie Festigkeit, hohe Bruchdehnung in trockenem Zustand. Die Membranen können trocken gelagert und trocken versandt werden.

Man kann die Membran aber auch z.B. nach dem Waschen und vor dem Trocknen mit Glycerin beladen und damit Eigenschaften beeinflussen wie z.B. die selfsealing Eigenschaften beim Einbetten in Einbettmassen wie Polyurethanen oder Epoxiharzen, auch kann die Trenneigenschaft beeinflußt werden.

Die Erfindung wird durch folgende Beispiele näher erläutert:

**Beispiele 1-5**

| Aus den Bestandteilen | |
|---|---|
| Polyäthersulfon (BASF; Ultrason 6020) | 22,5 Gew.% |
| Polyvinylpyrrolidon (ISP; PVP K30) | 11,3 Gew.% |
| ∈-Caprolactam | 30,8 Gew.% |
| γ-Butyrolacton | 30,8 Gew.% |
| Glyzerin | 4,6 Gew.% |

wird bei Raumtemperatur unter Rühren ein Slurry (pastenförmiges Gemisch) hergestellt, das sodann auf 115°C zwecks Bildung einer homogenen Lösung unter intensivem Rühren erwärmt wird. Die Lösung wird sodann auf etwa 50°C abgekühlt und durch Anlegen von Vakuum entgast und filtriert.

Unter Verwendung einer üblichen Hohlfaserdüse, eines 60 cm langen Luftspalts (gekapselter Klimakanal), in dem eine Temperatur von 35°C und eine relative Luftfeuchtigkeit von 85% herrscht, werden unter Einsatz der in der folgenden Tabelle angegebenen Innenfüllungen Hohlfasern hergestellt. Als Fällbad wird vollentsalztes Wasser mit

einer Temperatur von 40°C eingesetzt. Die Membranen werden mit 80°C heißem Wasser gewaschen und anschließend bei Raumtemperatur getrocknet.

Die in der Tabelle eingetragenen Versuchsergebnisse sind in Figur 1 graphisch dargestellt.

## Tabelle 1

| | Zusammensetzung Innenfüllung | | | | | | |
|---|---|---|---|---|---|---|---|
| Nr. | Caprolactam [Gew. %] | Glyzerin [Gew.%] | VE-Wasser [Gew.%] | Fällbad Temp [°C] | Düsentemp [°C] | UFR [ml/(m²·h·mmHg)] | SK (CC) |
| 1 | 43.0 | 43.0 | 14.0 | 40 | 60 | 60 | 0.25 |
| 2 | 44.0 | 44,0 | 12.0 | 40 | 60 | 70 | 0.30 |
| 3 | 45,0 | 45,0 | 10,0 | 40 | 60 | 92 | 0,37 |
| 4 | 46,0 | 46,0 | 8,0 | 45 | 60 | 234 | 0,58 |
| 5 | 47,0 | 47,0 | 6,0 | 40 | 60 | 420 | 0,73 |

### Beispiele 6 bis 12

In gleicher Weise wie bei den Beispielen 1-5 wird eine Spinnlösung hergestellt aus folgenden Komponenten:

| | |
|---|---|
| Polyethersulfon (BASF; Ultrason 6020) | 20,0 Gew.% |
| Polyvinylpyrrolidon (ISP; PVP 30) | 14,4 Gew.% |
| ε-Caprolactam | 30,3 Gew.% |
| γ-Butyrolacton | 30,3 Gew.% |
| Glyzerin | 4,5 Gew.% |
| vollentsalztes Wasser | 0,5 Gew.% |

Die verwendeten Innenfüllungen sowie die Untersuchsergebnisse sind in der Tabelle 2 zusammengefaßt und graphisch in Figur 1 als Kurve wiedergegeben.

## Tabelle 2

| | Zusammensetzung Innenfüllung | | | | | | |
|---|---|---|---|---|---|---|---|
| Nr. | Caprolactam [Gew. %] | Glyzerin [Gew.%] | VE-Wasser [Gew.%] | Fällbad Temp [°C] | Düsentemp [°C] | UFR [ml/(m²·h·mmHg)] | SK (CC) |
| 6 | 45.0 | 45.0 | 10.0 | 50 | 57 | 120 | 0.29 |
| 7 | 45,75 | 45,75 | 8,5 | 47 | 62 | 260 | 0.44 |
| 8 | 45,5 | 45,5 | 9,0 | 55 | 65 | 517 | 0,64 |
| 9 | 45,5 | 45,5 | 9,0 | 55 | 68 | 570 | 0,67 |
| 10 | 45,5 | 45,5 | 9,0 | 55 | 71 | 703 | 0,72 |
| 11 | 45.5 | 45,5 | 9,0 | 55 | 74 | 810 | 0.77 |
| 12 | 45.5 | 45.5 | 9,0 | 55 | 77 | 885 | 0.80 |

Aus den Kurven geht hervor, daß es möglich ist, gemäß der Erfindungen Membranen mit bestimmten hydraulischen Permeabilitäten und verschiedenen Siebkoeffizienten (Trenngrenzen) herzustellen. Selbstverständlich kann man durch wenige Versuche die Zahl der in Figur 1 wiedergegebenen Figuren vermehren und somit experimentell

Rezepturen für Membranen für die verschiedensten Einsatzzwecke festlegen.

**Beispiel 13**

In gleicher Weise wie in den vorstehend angegebenen Beispielen beschrieben, wird aus den Komponenten

| | |
|---|---|
| Polyäthersulfon (Ultrason 6020 BASF) | 20,0 Gew.% |
| Polyvinylpyrrolidon (PVP) K 30 | 14,0 Gew.% |
| Caprolactam | 30,3 Gew.% |
| Butyrolacton | 30,3 Gew.% |
| Glyzerin | 4,7 Gew.% |
| Wasser | 0,7 Gew.% |

eine Spinnlösung (Viskosität bei 40°C 150 Pa.s) und Hohlfasern hergestellt, wobei man als Innenfüllung eine Mischung aus 46 Gew.% Caprolactam, 46 % Glycerin und 8 % vollentsalztem Wasser verwertet. Die Länge des Luftspalts betrug 65 cm. Der Luftspalt wurde auf einer relative Feuchte von ca. 85 % und eine Temperatur von 38°C eingestellt. Als Fällbad wurde vollentsalztes Wasser einer Temperatur von 56°C eingesetzt. Die Düsentemperatur betrug 67°C.

Die auf diese Weise hergestellte Membran ist hervorragend als sogenannte High-flux-Dialysemembran geeignet.

Die Dialysemembran wies folgende Werte auf:

- Siebkoeffizient Cytochrom C:0,75
- Siebkoeffizient Albumin: 0,05
- Trenngrenze für Dextran (Retention > 95%): 55.000 Dalton
- UFR (Albumin): 50 ml/(hm$^2$mmHG)
- UFR (Wasser): 600 ml/(hm$^2$mmHG)

Zur Bestimmung der vorstehend aufgeführten Membranparameter wurden die weiter unten angegebenen Meßverfahren herangezogen.

**Beispiele 14 - 17**

In analoger Weise wie in den vorstehenden Beispielen beschrieben, wird eine Spinnlösung hergestellt aus folgenden Komponenten:

| | |
|---|---|
| Polyäthersulfon (Ultrason 6020 BASF) | 17,8 Gew.% |
| sulfoniertes Polyäthersulfon (Sulfonierunggrad 7 %) | 1,3 Gew.% |
| Polyvinylpyrrolidon K 30 | 19,1 Gew.% |
| Caprolactam | 14,3 Gew.% |
| Butyrolacton | 43,0 Gew.% |
| Glycerin | 3,9 Gew.% |
| Wasser | 0,6 Gew.% |

Die Lösung wurde unter Verwendung einer Spinndüse mit Ringspalt für die Polymerlösung und Nadel für die Lumenfüllung zu Hohlfasern verarbeitet. Als Fällbad diente vollentsalztes Wasser. Der Luftspalt hatte eine Höhe von 60 cm. Die Temperatur der Spinnlösung betrug 30°C und die Temperatur der Innenfüllung 25°C.

Die Zusammensetzungen der Innenfüllungen sind in der Tabelle 3 aufgelistet.

Tabelle 3

| Nr. | Gew.% ε-Caprolactam | Gew.% Glycerin | Gew.% Wasser | Permeabilität ml/h.m$^2$.mmHg |
|---|---|---|---|---|
| 14 | 43 | 4,3 | 14 | 460 |
| 15 | 44,75 | 44,75 | 10,5 | 1500 |

Tabelle 3 (fortgesetzt)

| Nr. | Gew.% ε-Caprolactam | Gew.% Glycerin | Gew.% Wasser | Permeabilität $ml/h.m^2.mmHg$ |
|---|---|---|---|---|
| 16 | 45,25 | 45,25 | 9,5 | 3850 |
| 17 | 45,75 | 45,75 | 8,5 | 5600 |

Das Rückhaltevermögen von Dextranmolekülen der gemäß den Beispielen 14 - 17 hergestellten Membranen ist in Figur 2 graphisch dargestellt.

Die Charakterisierung der Membranen kann nach folgenden Methoden stattfinden:

Ultrafiltrationsrate für Wasser (hydraulische Permeabilität)

Die Bestimmung der hydraulischen Permeabilität erfolgt an Kapillarmodulen, die jeweils 100 Kapillaren mit einer freien Fadenlänge von 20 cm enthalten. Die Einbettung der Kapillaren erfolgt mit Polyurethan. Bei der Wahl des Polyurethans ist darauf zu achten, daß die Klebmasse nicht in das Lumen der Kapillaren eindringt und dieses verschließt. Die Länge der Einbettung beträgt etwa 1 cm. Im Dead-End Modus wird destilliertes Wasser durch die zu prüfende Membran filtriert, wobei ein mittlerer Transmembrandruck TMP von 0,2 bar eingestellt wird.

Gemessen wird bei vorgegebenen mittleren Transmembrandruck die pro Zeiteinheit filtrierte Wassermenge

$$TMP = \{P(Eingang) + P(Ausgang)\}/2$$

mit P(Eingang) = Druckdifferenz über die Membran am Eingang des Prüfkörpers
P(Ausgang)=Druckdifferenz über die Membran am Ausgang des Prüfkörpers

$$UFR = \frac{V_{Filtrat}}{t\ .\ TMP\ .\ A}$$

| | |
|---|---|
| $V_{Filtrat}$ | Im Zeitintervall t gesammeltes Filtratvolumen [ml] |
| t | Zeitspanne über die das |
| A: | Filtrat gesammelt wird [h] Innere Oberfläche der Membran |

$$TMP = \frac{Druck\ Eingang + Druck\ Ausgang}{2}$$

Siebkoeffizient für Cytochrom C und Rinderalbumin aus einer wäßrigen 5%igen Rinderalbuminlösung

Die Bestimmung der Siebkoeffizienten von Cytochrom C und Rinderalbumin erfolgt in Anlehnung an die DIN 58 353. Die Flüsse für das Filtrat QF und Prüfflüssigkeit am Einlauf des Prüfkörpers $Q_{ein}$ werden wie folgt festgesetzt:

$Q_{ein}$ = 200 ml/(min.$m^2$)
$Q_F$ = 10 ml/(min.$m^2$)

Als Prüflösung dient eine 5%ige wäßrige Rinderalbuminlösung (Boehringer) der ein DAB 10 Puffer zugesetzt wird.

Zusammensetzung des Puffers:

| | |
|---|---|
| $KH_2PO_4$ | 0,19 g/l |
| NaCl | 8,0 g/l |
| $Na_2HPO_4.12H_2O$ | 2,38 g/l |

Charakterisierung der Trenngrenze durch Bestimmung des Rückhaltevermögens für Dextranmoleküle unterschiedlicher Molmasse

Die zu charakterisierende Membran wird im Crossflow-Modus von einer polydispersen wäßrigen Dextranlösung (Pool) angeströmt. Es wird eine definierte Filtratflußdichte durch die Membran eingestellt. Der Anteil von Dextranmolekülen unterschiedlicher Molmasse MW im Filtratstrom bzw. im Pool wird mit Hilfe der Gelpermeationschromatographie ermittelt.

Dazu wird das HPLC-Spectrum des Pools bzw. Filtrates in 40 äquidistante Bereiche unterteilt, deren Fläche durch numerische Integration ermittelt wird. Jedem dieser Zeitintervalle wird eine Molmasse entsprechend dem Eichspektrum zugeordnet, das mit monodispersen Dextranmolekülen bekannter Molmasse ermittelt wird. Den Siebkoeffizienten der Membran gegenüber Dextranmolekülen der Molmasse MW erhält man, indem man das Verhältnis der dieser Molmasse zugeordneten Flächensegmente der HPLC-Spektren des Filtrats und des Pools bildet.

$$SK_{MW} = \frac{\text{Fläche (MW, Permeat)}}{\text{Fläche (MW, Stammlösung)}}$$

$$\text{Retention} = (1\text{-Sk}) \;.\; 100 \; [\%]$$

Der Retentionskoeffizient für Dextranmoleküle der Molmasse MW berechnet sich wie folgt:

$$\text{Retentionskoeffizient}_{(MW)} = 1 - SK_{(MW}$$

Da das ermittelte Retentionsprofil empfindlich von den Versuchsbedingungen abhängt (Konzentrationspolarisation), müssen die Filtratflußdichte und die Wandscherrate bei der Bestimmung des Retentionsprofils eindeutig definiert werden. Für ein Kapillarmembranmodul der Länge 1, das n Kapillarmembranen enthält werden Filtratflußdichte und axialer Volumenfluß wie folgt berechnet:

$$QL = \frac{n \;.\; d^3 \;.\; Yw}{1{,}64 \;.\; 10^{11}}$$

Yw: Wandscherrate = 2000/sek
d: Innendurchmesser der Kapillarmembranen [µm]
n: Zahl der Kapillarmembranen im Prüfkörper
QL: axialer Volumenfluß im Lumen der Kapillarmembranen [ml/min]

$$QF = n \;.\; n \;.\; d \;.\; l \;.\; VL \;.\; 10^{-9}$$

QF: Filtratfluß [ml/min]
l: freie Länge der Membran im Prüfkörper
VL: Geschwindigkeit im Lumen [cm/min] VL = $QL.4.10^8/(n.nh.d^2)$
n: Zahl der Kapillaren im Prüfkörper

**Zusammensetzung der verwendeten Dextranlösung**

| | | | | |
|---|---|---|---|---|
| Dextrantyp | T10 | T40 | T70 | T500 |
| Einwaage | 0,64 g/l | 0,90 g/l | 0,4 g/l | 0,66 g/l |

(Hersteller: Pharmacia Biotech; Artikelbezeichnung: T10, T40, T70, T500)

Die Lösungen werden mit VE-Wasser angesetzt.

**<u>Beispiel 18</u>**

Aus einer 19%igen Spinnlösung mit einer Viskosität von ca. 40 PaS bei 40°C, bestehend aus

| | |
|---|---|
| 19,0 Gew% | Polyäthersulfon Type E 3010 (BASF) |

(fortgesetzt)

| | |
|---|---|
| 13,3 Gew% | Polyvinylpyrrolidon Type K 30 (ISP) |
| 31,5 Gew% | Caprolactam |
| 31,5 Gew% | Butyrolacton |
| 4,7 Gew% | Glyzerin (wasserfrei) |

wurden in der beschriebenen Weise Kapillarmembranen mit einem Lumen von 200 µm und einer Membranwanddicke von 40 µm hergestellt. Für die Lumenausbildung wurde eine Mischung bestehend aus 42,5/42,5/15 Teilen Caprolactam/Glyzerin/Wasser verwendet. Nach Passage durch einen gekapselten Klimakanal mit einer Länge von 60 cm wurde die ausgeformte Kapillarmembran in einem auf 50°C temperierten Wasserbad verfestigt, anschließend in 80°C heißem Wasser gewaschen und mit heißer Luft getrocknet.

Figur 3 gibt schematisch die Porenverteilung einer erfindungsgemäßen Membran wieder.

Im Rahmen der Erfindung können die Membrandimensionen, d.h. die Wanddicke und der Innendurchmesser in verhältnismäßig weiten Bereichen variiert werden; auch auf diese Weise ist es möglich, die Membran den verschiedenen Einsatzzwecken anzupassen. Für die Hemodialyse, Hemodiafiltration und Hemofiltration beträgt die Wanddicke im allgemeinen 10 bis 50 um und das Lumen 150 - 250 µm. Ein bevorzugter Wert ist z.B. Wanddicke 30 µm, Lumen 200 µm.

Für andere Anwendungen, z.B. die Ultrafiltration, kann die Wanddicke auch bis zu 1000 µm und das Lumen bis zu 5000 µm betragen. Diese Angaben dienen lediglich als Orientierungshilfe, selbstverständlich können die Dimensionen auch noch nach oben und nach unten erweitert werden.

**Patentansprüche**

1. Integrale, mehrfach asymmetrische semipermeable Membranen aus in ∈-Caprolactam löslichen Polymeren in Form von Flachmembranen, Schlauchmembranen oder Hohlfasermembranen bestehend aus

   a) einer an einer Oberfläche der Membran befindlichen dünnen Trennschicht A mit einer definierten Trenngrenze im Bereich von 500 bis 5 000 000 Dalton, wobei die Trennschicht A maximal 20 % der Gesamtdicke der Membranwand ausmacht und offene Poren aufweist,

   b) einer sich daran anschließenden grobporigen, schwammartigen, zellartige Poren aufweisende Stützschicht B ohne Fingerporen, die einen Porengradienten ausgehend von der Grenze mit der Trennschicht aufweist, deren hydraulischer Widerstand gegenüber der Trennschicht A und der Schicht C vernachlässigbar klein ist,

   c) einer sich daran anschließenden Schicht C, deren Porengröße größer als die der Trennschicht A, jedoch kleiner als die der Stützschicht B ist, und die in Kombination mit der Trennschicht A die hydraulische Permeabilität der Membran bestimmt, ohne dabei die Trenngrenze zu beeinflussen, und die zur anderen Oberflächenseite offenporig ist, wobei diese offenen Poren größer sind als die offenen Poren an der Oberfläche der Trennschicht A.

2. Membran nach Anspruch 1, dadurch gekennzeichnet, daß die Trennschicht A maximal 5 bis 10 % der Gesamtdicke der Membranwand ausmacht.

3. Membran nach Anspruch 2, dadurch gekennzeichnet, daß die Trennschicht A maximal 1 bis 5 % der Gesamtdicke der Membranwand ausmacht.

4. Membran nach einem der Ansprüche 1 bis 3, gekennzeichnet durch eine definierte Trenngrenze im Bereich von 500 bis 400 000 Dalton.

5. Membran nach Anspruch 4, gekennzeichnet durch eine definierte Trenngrenze im Bereich von 500 bis 60 000 Dalton.

6. Membran, dadurch gekennzeichnet, daß mindestens 50 % der Poren in der Stützschicht B einen Durchmesser von 0,1 bis 1 µm aufweisen und mindestens 50 % der Poren der Schicht C einen Porendurchmesser von 0,05 bis 2 µm aufweisen, wobei die Porengröße der Schicht C kleiner als die der Schicht B ist.

**7.** Membran nach einem der Ansprüche 1 bis 6, dadurch gekennzeichnet, daß die Stützschicht 10 bis 60 % und die Schicht C 30 - 80 % der Gesamtdicke der Membran ausmacht.

**8.** Membran nach einem der Ansprüche 1 bis 7, dadurch gekennzeichnet, daß die Membran aus mindestens 80 Gew. % aus Polyäthersulfon besteht.

**9.** Verfahren zur Herstellung von Membranen nach einem der Ansprüche 1 bis 8, indem man aus einem in ∈-Caprolactam löslichen Polymer in einer Mischung von ∈-Caprolactam und einem oder mehreren Cosolventen, sowie gegebenenfalls von Nichtlösern und weiteren Additiven eine hochviskose, 17 bis 27 Gew.%ige Lösung des Polymeren herstellt, die gemessen bei 40°C eine Viskosität von mindestens 20 Pa.s aufweist, diese Lösung unter Verwendung üblicher Werkzeuge zu einer Flach-, Schlauch- oder Hohlfasermembran ausformt, wobei man zunächst bei der Ausformung der Polymerlösung durch unterschiedliche Temperaturen an den beiden Oberflächen der Membranen ein Viskositätsprofil über die Dicke der sich bildenden Membran einstellt, das Polymer, ggf. unter Zwischenschalten einer klimatisierten Luftstrecke, die einen gas- oder dampfförmigen Nichtlöser des Polymers enthält, durch diffusiv induzierte Koagulation ausfällt, indem man auf der Seite, mit der niederen Temperatur und somit höheren Viskosität die Trennschicht A durch eine schnellere Koagulation bildet als auf der Seite, auf der sich die Schicht C bildet.

**10.** Verfahren nach Anspruch 9, dadurch gekennzeichnet, daß man zum Ausformen eine Lösung verwendet, die eine Temperatur von 20 bis 90°C aufweist.

**11.** Verfahren nach Anspruch 10, dadurch gekennzeichnet, daß man zum Ausformen eine Polymerlösung einer Temperatur von 10 bis 90°C und einer Viskosität von 150 bis 5 Pa.s bei der Ausformungstemperatur verwendet.

**12.** Verfahren nach Anspruch 9, dadurch gekennzeichnet, daß man eine Lösung des Polymeren mit einer Viskosität von 40 bis 200 Pa.s gemessen bei 40°C verwendet.

**13.** Verfahren nach Anspruch 12, dadurch gekennzeichnet, daß man eine Lösung des Polymeren mit einer Viskosität von 50 bis 150 Pa.s verwendet.

**14.** Verfahren nach einem der Ansprüche 9 bis 13, dadurch gekennzeichnet, daß man die Lösung zu einer Hohlfasermembran ausformt und zum Auslösen der Koagulation im Inneren der Hohlfasermembran eine Innenfüllung mit einer Viskosität von 0,03 bis 0,5 Pa.s, gemessen bei 25°C verwendet, die Hohlfaser durch einen mit Wasserdampf klimatisierten Luftspalt führt und die Hohlfaser sodann zur Vervollständigung der Koagulation und Fixierung der Struktur durch ein Fällbad, vorzugsweise ein temperiertes Wasserbad leitet.

**15.** Verwendung der Membranen nach einem der Ansprüche 1-8 für Trennprozesse im Nanofiltrations- und unterem Ultrafiltrationsbereich.

**16.** Verwendung der Membranen nach Anspruch 13 für die Hemodialyse, Hemodiafiltration und Hemofiltration.

**17.** Verwendung der Membranen nach einem der Ansprüche 1-8 zum Einkapseln von Wirkstoffen.

**18.** Verwendung der Membranen nach einem der Ansprüche 1-8 zum Einkapseln von Wirkstoffen für die extrakorporale oder intrakorporale Behandlung des menschlichen oder tierischen Körpers.

**Claims**

**1.** Integral, multi-asymmetric, semi-permeable membranes made from ∈-caprolactam-soluble polymers in the form of flat membranes, tubular membranes or hollow fibre membranes, comprising

a) a thin separating layer A on one surface of the membrane, with a defined cut-off within a range of between 500 and 5,000,000 Daltons, whereby the separating layer A accounts for a maximum of 20% of the entire thickness of the membrane wall and has open pores,

b) a large-pored, sponge-like, support layer B which is adjacent to the separating layer A, with cell-like pores but without finger pores, which has a pore gradient starting from the border with the separating layer, and has

a hydraulic resistance to separating layer A and layer C that is negligibly low,

c) a layer C which is adjacent to layer B, with a pore size which is larger than that of separating layer A but smaller than that of support layer B, and which in combination with the separating layer A determines the hydraulic permeability of the membrane, without affecting the cut-off, and which is open-pored on the other surface, whereby these open pores are larger than the open pores on the surface of separating layer A.

**2.** A membrane in accordance with Claim 1, characterised in that the separating layer A accounts for a maximum of between 5 and 10% of the entire thickness of the membrane wall.

**3.** A membrane in accordance with Claim 2, characterised in that the separating layer A accounts for a maximum of between 1 and 5% of the entire thickness of the membrane wall.

**4.** A membrane in accordance with one of Claims 1 to 3, characterised by a defined cut-off within a range of between 500 and 400,000 Daltons.

**5.** A membrane in accordance with Claim 4, characterised by a defined cut-off within a range of between 500 and 60,000 Daltons.

**6.** A membrane characterised in that at least 50% of the pores in the support layer B have a diameter of between 0.1 and 1 µm, and at least 50% of the pores in layer C have a pore diameter of between 0.05 and 2 µm, whereby the pore size in layer C is smaller than that in layer B.

**7.** A membrane in accordance with one of Claims 1 to 6, characterised in that the support layer accounts for between 10 and 60% and layer C accounts for between 30 and 80% of the entire thickness of the membrane.

**8.** A membrane in accordance with one of Claims 1 to 7, characterised in that the membrane consists of at least 80 weight percent polyether sulfone.

**9.** A process for manufacturing membranes in accordance with one of Claims 1 to 8, by using a polymer which is soluble in ∈-caprolactam, preparing a highly viscous 17 to 27 weight percent solution of the polymer in a mixture of ∈-caprolactam and one or more co-solvents and, if necessary, nonsolvents and further additives, whereby the solution has a viscosity of at least 20 Pa.s when measured at 40°C, shaping this solution into a flat, tubular or hollow-fibre membrane using standard tools, whereby during the shaping of the polymer solution a viscosity profile throughout the thickness of the forming membrane is set by applying different temperatures on each surface of the shaped polymer solution, precipitating the polymer by means of diffusively induced coagulation, if necessary using an in-process conditioned air space containing a nonsolvent of the polymer in gas or vapour form, during which process the separating layer A is formed by faster coagulation on the side with the lower temperature (and therefore higher viscosity) than on the side on which layer C is formed.

**10.** A process in accordance with Claim 9, characterised in that a solution with a temperature of between 20 and 90°C is used for the shaping process.

**11.** A process in accordance with Claim 10, characterised in that a polymer solution is used for the shaping process which has a temperature of between 10 and 90°C and a viscosity of between 150 and 5 Pa.s at the shaping temperature.

**12.** A process in accordance with Claim 9, characterised in that a solution of the polymer is used which has a viscosity of between 40 and 200 Pa.s when measured at 40°C.

**13.** A process in accordance with Claim 12, characterised in that a solution of the polymer is used which has a viscosity of between 50 and 150 Pa.s.

**14.** A process in accordance with one of Claims 9 to 13, characterised in that the solution is shaped into a hollow fibre membrane and an inner filling with a viscosity of between 0.03 and 0.5 Pa.s when measured at 25°C is used to induce coagulation inside the hollow fibre membrane, the hollow fibre is guided through an air gap which is conditioned with water vapour, and the hollow fibre is then guided through a precipitation bath, which is preferably a temperature-controlled water bath, for completion of the coagulation process and fixing of the structure.

15. Application of the membranes in accordance with Claims 1-8 for separating processes in the nanofiltration range and in the lower ultrafiltration range.

16. Application of the membranes in accordance with Claim 13 for haemodialysis, haemodiafiltration and haemofiltration.

17. Application of the membranes in accordance with one of Claims 1-8 for encapsulating active agents.

18. Application of the membranes in accordance with one of Claims 1-8 for encapsulating active agents for use in extracoporeal and intracorporeal treatment of human or animal body.

**Revendications**

1. Membranes semi-perméables, polyasymétriques, intégrales, en polymères solubles dans l'ε-caprolactame, sous la forme de membranes planes, de membranes tubulaires ou de membranes à fibres creuses, qui sont constituées de :

   a) une couche séparatrice mince A, située à une surface de la membrane et ayant une limite de séparation définie, comprise dans le domaine allant de 500 à 5 000 000 daltons, ladite couche séparatrice A représentant au maximum 20 % de l'épaisseur totale de la paroi membranaire et présentant des pores ouverts,
   b) une couche support spongieuse B à gros pores, présentant des pores en forme de cellule, sans pores en forme de doigt, qui est contiguë à la couche précédente, qui présente un gradient de pores à partir de la frontière avec la couche séparatrice et dont la résistance hydraulique est faible et négligeable par rapport à celles de la couche séparatrice A et de la couche C,
   c) une couche C contiguë à la précédente, dont la taille de pore est supérieure à celle de la couche séparatrice A, mais inférieure à celle de la couche support B, et qui, en combinaison avec la couche séparatrice A, fixe la perméabilité hydraulique de la membrane, sans avoir de l'effet sur la limite de séparation, et qui est à pores ouverts de l'autre côté en surface, ces pores ouverts étant plus gros que les pores ouverts à la surface de la couche séparatrice A.

2. Membrane selon la revendication 1, caractérisée en ce que la couche séparatrice A représente au maximum 5 à 10 % de l'épaisseur totale de la paroi membranaire.

3. Membrane selon la revendication 2, caractérisée en ce que la couche séparatrice A représente au maximum 1 à 5 % de l'épaisseur totale de la paroi membranaire.

4. Membrane selon l'une quelconque des revendications 1 à 3, caractérisée par une limite de séparation définie, comprise dans le domaine allant de 500 à 400 000 daltons.

5. Membrane selon la revendication 4, caractérisée par une limite de séparation définie, comprise dans le domaine allant de 500 à 60 000 daltons.

6. Membrane selon l'une quelconque des revendications précédentes, caractérisée en ce qu'au moins 50 % des pores de la couche support B présentent un diamètre de 0,1 à 1 micromètre et au moins 50 % des pores de la couche C présentent un diamètre de pore de 0,05 à 2 micromètres, la taille des pores de la couche C étant inférieure à celle des pores de la couche B.

7. Membrane selon l'une quelconque des revendications 1 à 6, caractérisée en ce que la couche support représente 10 à 60 % de l'épaisseur totale de la membrane et la couche C représente 30 à 80 % de l'épaisseur totale de la membrane.

8. Membrane selon l'une quelconque des revendications 1 à 7, caractérisée en ce qu'elle est constituée de polyéthersulfone pour au moins 80 % en poids.

9. Procédé de préparation de membranes selon l'une quelconque des revendications 1 à 8, dans lequel on prépare, à partir d'un polymère soluble dans l'ε-caprolactame, dans un mélange d'ε-caprolactame et d'un ou plusieurs cosolvants, et éventuellement de non-solvants et d'autres additifs, une solution très visqueuse, à 17 à 27 % en poids

du polymère, qui présente une viscosité à 40°C d'au moins 20 Pa.s, et on transforme cette solution au moyen d'instruments classiques en une membrane plane, une membrane tubulaire ou une membrane à fibres creuses, en établissant tout d'abord lors de la transformation de la solution de polymère, un profil de viscosité suivant l'épaisseur de la membrane en cours de formation grâce à des températures différentes aux deux surfaces de la membrane, et en faisant précipiter le polymère par coagulation provoquée par diffusion, éventuellement en intercalant un espace d'air climatisé qui contient un non-solvant du polymère, gazeux ou sous forme de vapeur, en formant la couche séparatrice A du côté ayant la température la plus basse et donc la viscosité la plus élevée, grâce à une coagulation plus rapide que du côté où se forme la couche C.

**10.** Procédé selon la revendication 9, caractérisé en ce que l'on utilise pour la transformation une solution qui présente une température de 20 à 90°C.

**11.** Procédé selon la revendication 10, caractérisé en ce que l'on utilise pour la transformation une solution de polymère ayant une température de 10 à 90°C et une viscosité de 150 à 5 Pa.s à la température de transformation.

**12.** Procédé selon la revendication 9, caractérisé en ce que l'on utilise une solution de polymère ayant une viscosité de 40 à 200 Pa.s à 40°C.

**13.** Procédé selon la revendication 12, caractérisé en ce que l'on utilise une solution de polymère ayant une viscosité de 50 à 150 Pa.s.

**14.** Procédé selon l'une quelconque des revendications 9 à 13, caractérisé en ce que l'on transforme la solution en une membrane à fibres creuses et, pour provoquer la coagulation à l'intérieur de la membrane à fibres creuses, on utilise un remplissage interne ayant une viscosité de 0,03 à 0,5 Pa.s à 25°C, on fait traverser à la fibre creuse un intervalle d'air climatisé contenant de la vapeur d'eau et ensuite, pour achever la coagulation et fixer la structure, on fait passer la fibre creuse par un bain de précipitation, de préférence un bain d'eau à température constante.

**15.** Utilisation des membranes selon l'une quelconque des revendications 1 à 8, pour des procédés de séparation dans le domaine de la nanofiltration et de l'ultrafiltration inférieure.

**16.** Utilisation des membranes selon la revendication 15, pour l'hémodialyse, l'hémodiafiltration et l'hémofiltration.

**17.** Utilisation des membranes selon l'une quelconque des revendications 1 à 8, pour l'enrobage de constituants actifs.

**18.** Utilisation des membranes selon l'une quelconque des revendications 1 à 8, pour l'enrobage de constituants actifs pour le traitement extracorporel ou intracorporel du corps humain ou du corps des animaux.

Fig. 1

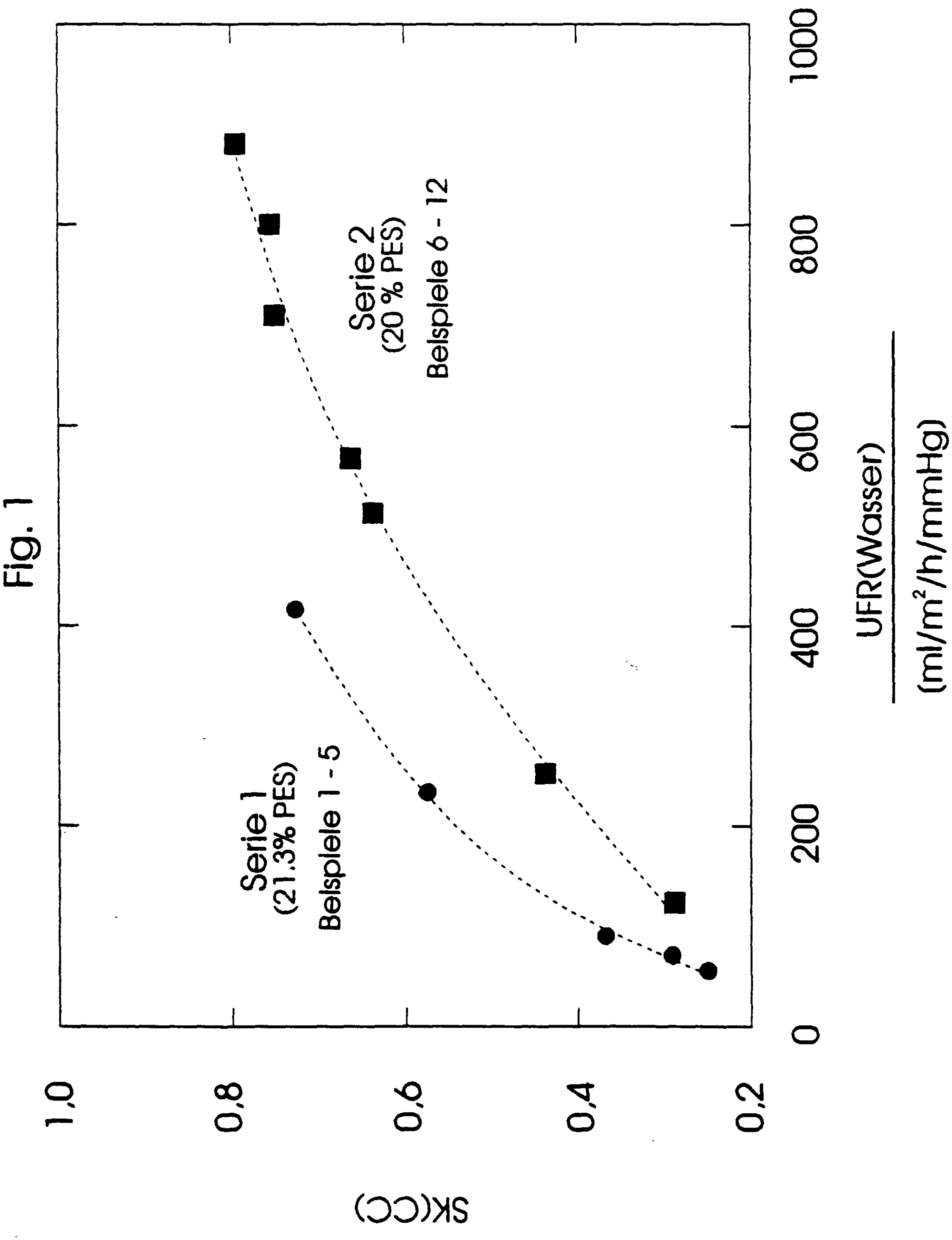
SK(CC)
1,0
0,8
0,6
0,4
0,2
0
200
400
600
800
1000
UFR(Wasser)
(ml/m²/h/mmHg)
Serie 1
(21.3% PES)
Beispiele 1 - 5
Serie 2
(20 % PES)
Beispiele 6 - 12

Rückhaltevermögen von Dextranmolekülen

Fig. 2

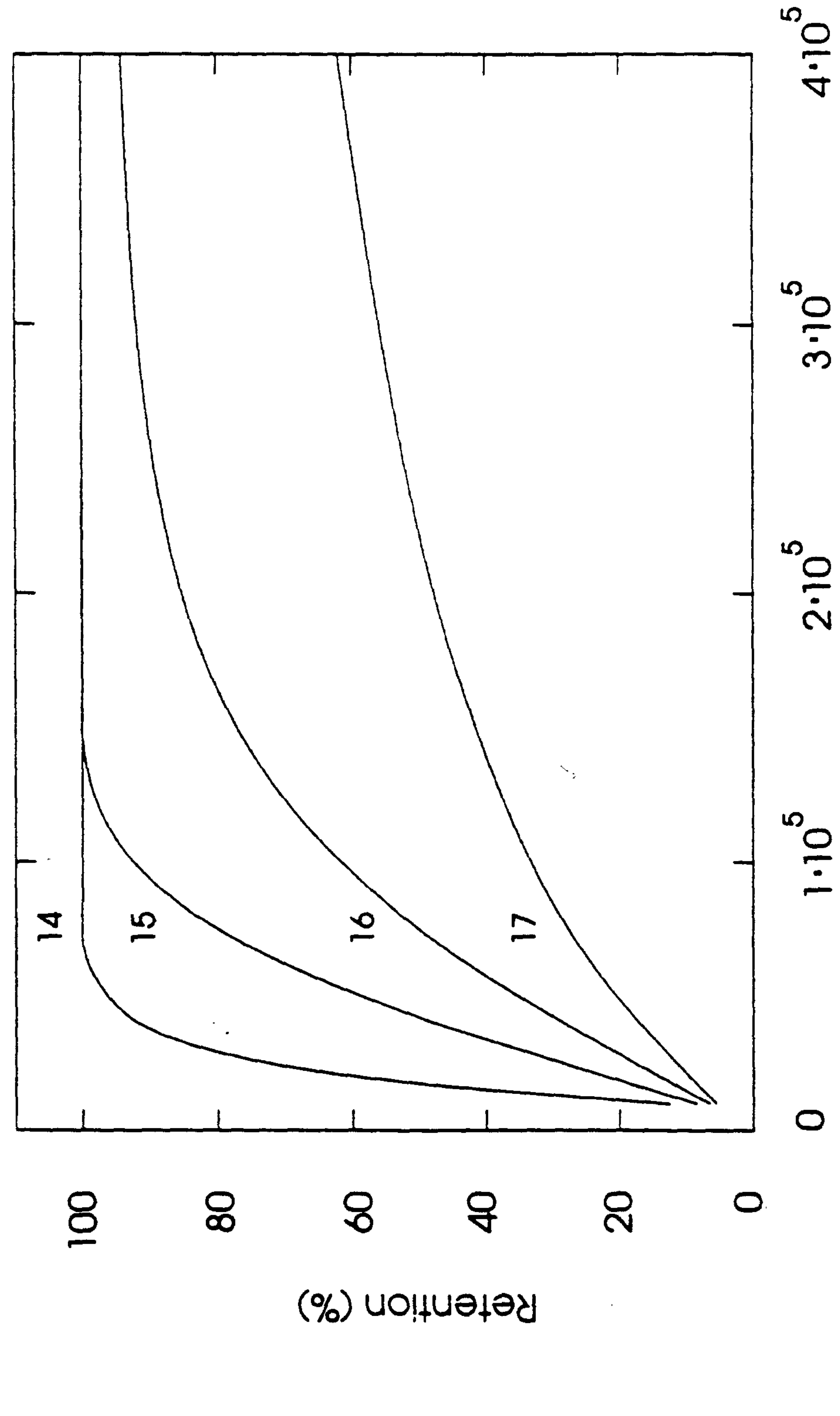

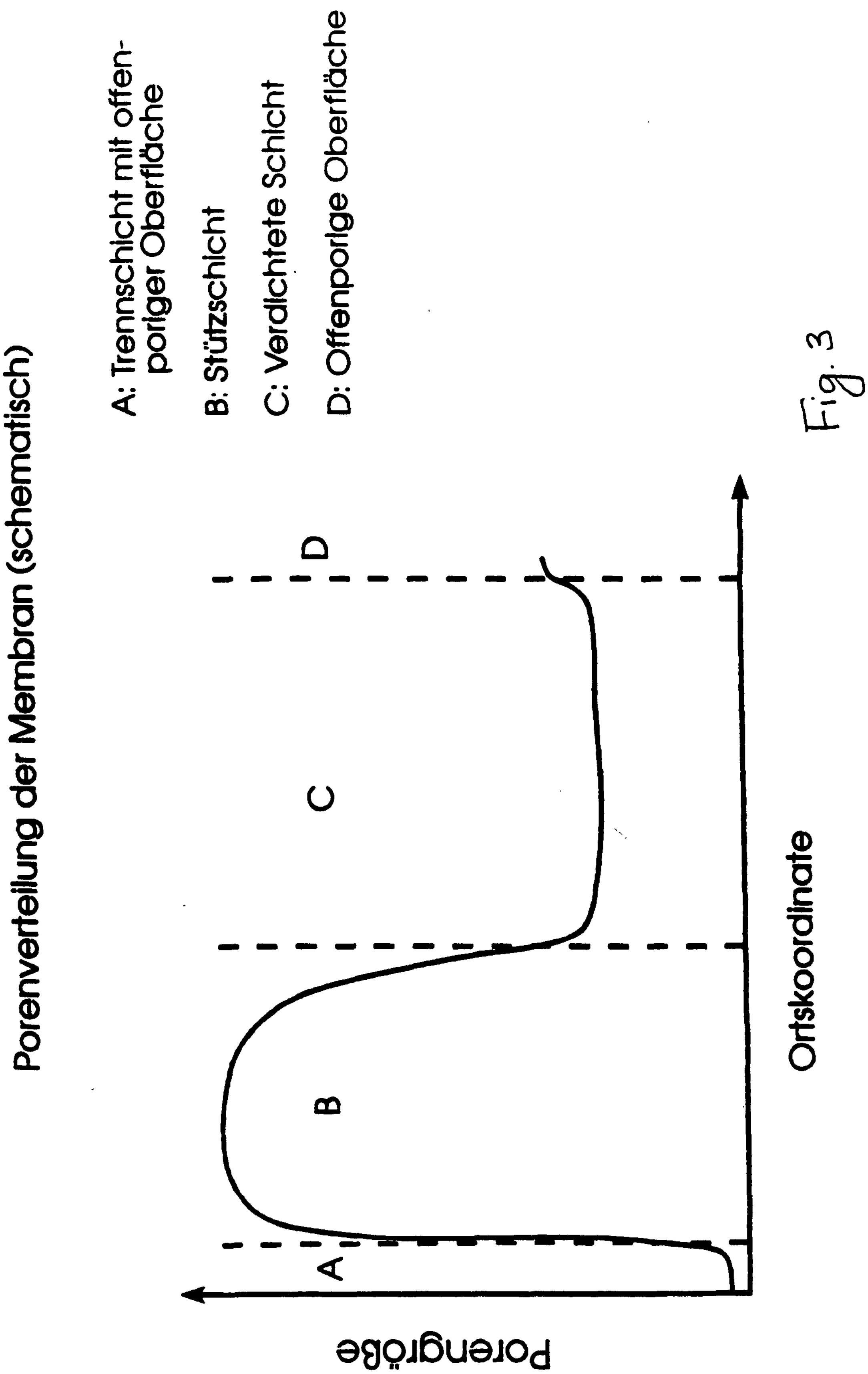
Porenverteilung der Membran (schematisch)
A: Trennschicht mit offen-
porlger Oberfläche
B: Stützschicht
C: Verdichtete Schicht
D: Offenporige Oberfläche
A
B
C
D
Porengröße
Ortskoordinate

Fig. 3